(19) Europäisches Patentamt
European Patent Office
Office européen des brevets

(11) Veröffentlichungsnummer: **0 381 172 B1**

(12) **EUROPÄISCHE PATENTSCHRIFT**

(45) Veröffentlichungstag der Patentschrift: **26.01.94**

(51) Int. Cl.$^5$: **C08L 77/00**

(21) Anmeldenummer: **90101856.4**

(22) Anmeldetag: **31.01.90**

# (54) Homogen gemischte Legierungen aus aromatischen Polyamiden und Poly-N-Vinylpyrrolidon, Verfahren zu ihrer Herstellung und ihre Verwendung.

(30) Priorität: **02.02.89 DE 3903099**

(43) Veröffentlichungstag der Anmeldung:
**08.08.90 Patentblatt 90/32**

(45) Bekanntmachung des Hinweises auf die Patenterteilung:
**26.01.94 Patentblatt 94/04**

(84) Benannte Vertragsstaaten:
**BE DE FR GB IT NL SE**

(56) Entgegenhaltungen:
**EP-A- 0 199 090**
**EP-A- 0 362 726**
**EP-A- 0 401 740**
**GB-A- 944 869**
**US-A- 3 564 075**

**JOURNAL OF APPLIED POLYMER SCIENCE, Band 20, Nr. 6, 1976, Seiten 1665-1671, John Wiley & Sons, Inc., US; E. SCHCHORL et al.: "Polymeric alloys of poly(vinylpyrrolidone) with a macroyclic polyether-polyamide"**

(73) Patentinhaber: **HOECHST AKTIENGESELLSCHAFT**

**D-65926 Frankfurt(DE)**

(72) Erfinder: **Haubs, Michael, Dr.**
**Auf dem Weiher 18**
**D-6550 Bad Kreuznach(DE)**
Erfinder: **Herrmann-Schönherr, Otto, Dr.**
**Grafenstrasse 15**
**D-6140 Bensheim-Auerbach(DE)**

**EP 0 381 172 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft homogen gemischte Legierungen Von aromatischen Polyamiden mit Poly-N-vinylpyrrolidon, ein Verfahren zu ihrer Herstellung, und ihre Verwendung als geformte Artikel wie Folien, Beschichtungen oder Preßkörper. Der Begriff "homogen gemischte Legierungen" sagt aus, daß die Komponenten der Legierung miteinander homogen gemischt sind.

Aromatische Polyamide (im folgenden als Polyaramide bezeichnet) sind bekannt für ihre ausgezeichneten thermischen, chemischen und mechanischen Eigenschaften. Daher sind beispielsweise Fasern und Folien aus solchen Rohstoffen für technische Einsatzgebiete gut geeignet - insbesondere zur Verstärkung von Kunststoffen oder als Filtermaterialien.

Poly-N-vinylpyrrolidon (PVP) ist mit unterschiedlichen Molekulargewichten im Handel. Bis zu Molekulargewichten von ca. einer Million löst sich PVP schon in kaltem Wasser. Die Erweichungstemperatur (Glastemperatur) von PVP beträgt im vollkommen wasserfreien Zustand 175°C. PVP weist folgende wiederkehrende Struktureinheiten auf:

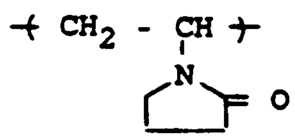

Die Synthese und die Eigenschaften von PVP sind ausführlich beschrieben in Houben-Weyl: Methoden der Organischen Chemie, Band XIV/1, S. 1106 ff. (1961)

US-A-3564075 und GB-A-944069 beschreiben Mischungen aus aliphatischen Polyamiden und Poly-N-Vinylpyrrolidon mit erhöhter Transparenz.

Die Herstellung von mikroporösen, hochfesten Hohlfasern aus einer stabilen Lösung aus aromatischen Polysulfonpolymeren bzw. aromatischen Polyamiden als faserbildenen Polymeren, PVP und geeigneten Lösungsmitteln wie Dimethylacetamid oder Dimethylformamid ist bekannt (US-PS 4,051,300). Diese Veröffentlichung fuhrt aus, daß das Polyaramid mit PVP nur begrenzt verträglich sein soll und daß beim beschriebenen Koagulationsprozess eine Phasenseparation eintritt.

Es ist weiterhin bekannt, Polymere zu legieren, um neue Werkstoffe herzustellen, wie sie auf andere Art und Weise, z.B. durch Copolymerisation, nicht oder nur schwierig realisierbar sind. Insbesondere können auf diese Weise technologisch wichtige Eigenschaften verbessert werden, z.B. thermische Stabilität, mechanische Eigenschaften und Lösungsmittelresistenz, zudem wird ihre Wirtschaftlichkeit erhöht.

Man ist jedoch bis heute weit davon entfernt, die Eigenschaften einer Legierung aus den Eigenschaften der Einzelkomponenten vorherzusagen zu können. Daher bleibt das Legieren von Polymeren noch weitgehend empirisch. Insbesondere ist die homogene Mischbarkeit oder Kompatibilität von Legierungen, speziell solchen aus stark wechselwirkenden Polymeren, trotz einer sehr großen Zahl von experimentellen und theoretischen Arbeiten auf diesem Gebiet bisher nicht vorhersagbar. So ist bekannt, daß kompatible Legierungen aus Polymeren selten sind (Journal of Polymer Science, Polymer Physics Edition, Vol. 21, S. 11 (1983)).

An anderer Stelle wird ausgeführt, daß Forschungsaktivitäten zur Entdeckung einer Reihe von mischbaren Polymerkombinationen gefuhrt haben. Die vollständige Mischbarkeit sei eine ungewöhnliche Eigenschaft in binären Polymer-Mischungen, die normalerweise dazu tendieren, Zweiphasensysteme auszubilden (Polymer, Vol. 24, S. 60 (1983)).

Es ist auch bekannt, daß die überwiegende Mehrheit von Paaren von Polymeren nach dem Mischen zweiphasige Blends bilden, wie aufgrund der kleinen Mischungsentropie für sehr große Moleküle vermutet werden kann. Diese Mischungen sind allgemein charakterisiert durch Opazität, unterschiedliche thermische Übergange und schlechte mechanische Eigenschaften (Olabisi, Robeson, Shaw: Polymer-Polymer Miscibility, Academic Press, New York, S. 7 (1979)).

In einer anderen Veröffentlichung wird angegeben, daß im letzten Jahrzehnt die Zahl von Blendsystemen, die als mischbar bekannt sind, beträchtlich zugenommen hat. Weiterhin wurde eine Reihe von Systemen gefunden, die eine obere oder untere kritische Lösungstemperatur aufweisen, d.h. vollständige Mischbarkeit besteht nur in einem begrenzten Temperaturbereich. Moderne thermodynamische Theorien waren bis zu diesem Zeitpunkt begrenzt erfolgreich, was die Vorhersagbarkeit der Mischbarkeit betrifft. Es wurde daher bezweifelt, daß irgendeine praktische Theorie entwickelt werden kann, welche die realen Komplexitäten berücksichtigt, die die Natur den Polymer-Polymer-Wechselwirkungen verleiht (Macromolecules, Vol. 16, S. 753 (1983)).

Legierungen aus homogen gemischten Polymeren sind also sehr selten. Außerdem ist Mischbarkeit nicht vorhersagbar. Demgegenüber sind die Methoden zur experimentellen Bestimmung des Mischbarkeitsverhaltens bekannt (Olabisi, Robeson, Shaw: Polymer-Polymer-Miscibility, Academic Press, New York, S. 321-327 (1979)).

Es bestehen neben anderem folgende Unterscheidungsmerkmale:

Das eindeutigste Kriterium für homogene Mischbarkeit besteht in dem Auftreten einer einzigen Glastemperatur, die zwischen denen der zur Herstellung der Mischung verwendeten Komponenten liegt.

Die Transparenz von Folien aus Polymer- Legierungen ist ein Indiz, daß die Komponenten homogen gemischt vorliegen.

Mehrphasige Legierungen können meist von homogen gemischten Legierungen durch transmissionselektronenmikroskopische Untersuchungen an Dünnschnitten unterschieden werden.

Rasterelektronenmikroskopische Untersuchungen von Bruchflächen oder geätzten Oberflächen von Legierungen erlauben Rückschlüsse auf die Mischbarkeit der enthaltenden Komponenten.

In der Technik besteht großes Interesse an homogen gemischten Polymerlegierungen, da ihre Eigenschaften durch Variation der Komponenten und der Mischungsverhältnisse bestimmten Anforderungen gezielt angepaßt werden können. Polyamide sind aufgrund ihrer außergewöhnlichen thermischen und mechanischen Eigenschaften als Legierungsbestandteil besonders interessant. Für bestimmte Anwendungen, z.B. zur Verbesserung der Verarbeitbarkeit, ist eine Erniedrigung der Glastemperatur von Vorteil. Auch die gezielte Anpassung von mechanischen Eigenschaften wird in der Praxis verlangt. Schließlich ist das Erreichen einer bestimmten Wasseraufnahmefähigkeit für viele Anwendungen von Bedeutung. Da die bisher bekannten Legierungen diesen Anforderungen meist nicht gewachsen sind, bestand somit die Aufgabe, neue Polyaramidlegierungen zu finden, deren Komponenten homogen gemischt sind, und die genannten Kriterien erfüllen.

Die Aufgabe wurde dadurch gelöst, daß bestimmte Polyaramide mit PVP überraschenderweise homogen gemischte Legierungen bilden, die abhängig von dem Mischungsverhältnis beider Komponenten die gezielte Einstellung der oben genannten physikalischen Eigenschaften erlauben.

Die Erfindung betrifft eine homogen gemischte Legierung enthaltend im wesentlichen

A) Poly-N-vinylpyrrolidon und

B) mindestens ein Homo- oder Copolyaramid mit mindestens einer wiederkehrenden Struktureinheit der Formel (I)

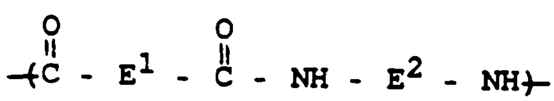 (I)

in der $E^1$ und $E^2$ gleich oder verschieden sind und aus den Gruppierungen

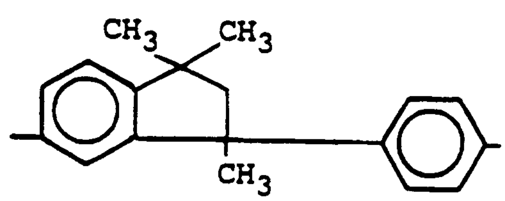

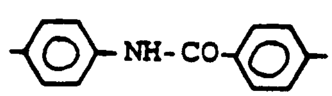

- $Ar^1$-
- $Ar^1$-X-$Ar^2$- ausgewählt sind,

in denen $Ar^1$ und $Ar^2$ gleiche oder verschiedene 1,2-Phenylen-, 1,3-Phenylen- oder 1,4-Phenylenreste, die durch ($C_1$-$C_6$)-Alkyl, ($C_1$-$C_6$)-Alkoxy, vorzugsweise mit jeweils bis zu 4 C-Atomen in der Alkylgruppe, $-CF_3$ oder Halogen, beispielsweise Fluor, Chlor oder Brom, substituiert sein können, bedeuten und der Rest X

a) eine direkte Bindung ist oder einen der folgenden zweiwertigen Reste darstellt -O-, $-SO_2-$, -CO-, $-C(R^1)_2-$, in dem $R^1$ Wasserstoff, ($C_1$-$C_6$)-Alkyl oder Fluoralkyl mit 1-4 C-Atomen in der Alkylgruppe ist, wie $-CH_2-$, $-C(CH_3)_2-$ oder $-C(CF_3)_2-$ oder

b) -Z-$Ar^1$-Z-, in dem Z der Rest -O- oder -$C(CH_3)_2$- ist, oder

c) -O-$Ar^1$-Y-$Ar^2$-O-, in der Y die unter Xa) angegebene Bedeutung hat.

Zur Herstellung der erfindungsgemäß benötigten Polyaramide mit den wiederkehrenden Struktureinheiten gemäß Formel (I), sind beispielsweise die folgenden Verbindungen geeignet:

Aromatische Dicarbonsäurederivate der Formel Cl-CO-$Ar^1$-CO-Cl wie 4,4'-Diphenylsulfondicarbonsäuredichlorid, 4,4'-Diphenyletherdicarbonsäuredichlorid, 4,4'-Diphenyldicarbonsäuredichlorid, 2,6-Naphthalindicarbonsäuredichlorid, Isophthalsäuredichlorid, ganz besonders aber Terephthalsäuredichlorid und substituiertes Terephthalsäuredichlorid, z.B. 2-Chlor-Terephthalsäuredichlorid,

aromatische Diamine der Struktur $H_2N$-$Ar^1$-$NH_2$ wie m-Phenylendiamine bzw. substituierte Phenylendiamine, z.B. 2-Chlor-, 2,5-Di-Chlor- oder 2-Methoxy-p-Phenylendiamin, insbesondere p-Phenylendiamin, substituierte Benzidinderivate der Formel

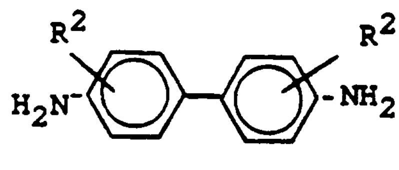

in der $R^2$ einen niederen Alkyl- oder Alkoxyrest mit bis zu je 4 C-Atomen in derAlkylgruppe, vorzugsweise -$CH_3$ oder -$OCH_3$, oder F, Cl oder Br darstellt, wie 3,3'-Dimethoxy-, 3,3'-Di-Chlor-, 2,2'-Dimethyl- und vorzugsweise 3,3'-Dimethylbenzidin,

Diaminkomponenten der Formel $H_2N$-$Ar^1$-X-$Ar^2$-$NH_2$ wie 4,4'-Diaminobenzophenon, Bis[4-Aminophenyl]-sulfon, Bis[4-(4'-Aminophenoxy)phenyl]-sulfon, 1,2-Bis[4'-Aminophenoxy]-benzol, 1,4-Bis[(4'-Aminophenyl)isopropyl]-benzol, 2,2'-Bis[4-(4'-Aminophenoxy)phenyl]-propan, insbesondere 1,4-Bis-(4'-aminophenoxy)benzol.

Ebenfalls können auch Gemische der genannten Dicarbonsäurechloride und/oder der Diamine eingesetzt werden.

Das Homo- oder Copolyaramid wird aus wiederkehrenden Struktureinheiten der Formel (I) gebildet. Die einzelnen Struktureinheiten der Polymeren können verschieden sein, so daß bei den Copolymeren sowohl $E^1$ als auch $E^2$ unterschiedliche Reste darstellen können.

Vorzugsweise ist $E^1$ ein 1,3- oder 1,4-Phenylenrest, oder der Rest

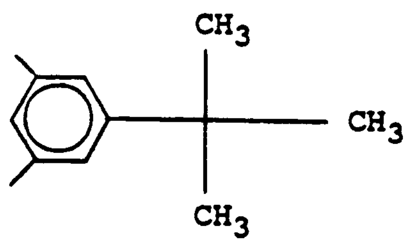

oder

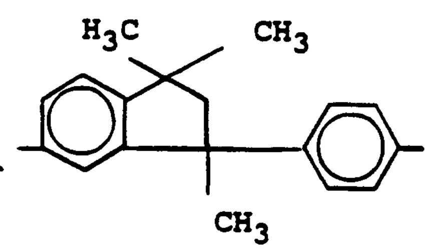

und $E^2$ ein 1,4-Phenylenrest oder der Rest

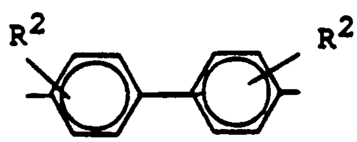

in dem $R^2$ einen niederen Alkyl- oder Alkoxyrest mit bis zu je 4 C-Atomen in der Alkylgruppe oder F, Cl oder Br darstellt, oder der Rest

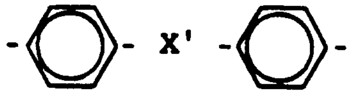

wobei X' die Gruppe $-C(R^1)_2-$, in der $R^1$ Wasserstoff oder $(C_1-C_4)$-Alkyl ist, oder die Gruppierung

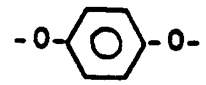

darstellt.

Besonders bevorzugt ist eine Legierung, die neben PVP wenigstens ein Copolyaramid mit mindestens drei statistisch wiederkehrenden Struktureinheiten der Formel (I), in der $E^1$ ein zweiwertiger p-Phenylenrest ist,
$E^2$ in den drei wiederkehrenden Struktureinheiten je einmal ein zweiwertiger p-Phenylenrest, ein Rest der Formel

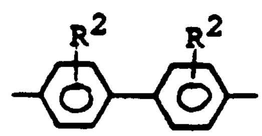

mit $R^2$ gleich $CH_3$ , $OCH_3$, F, Cl oder Br, und ein Rest der Formel

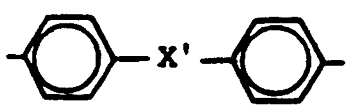

ist, bei dem X' die oben angeführte Bedeutung hat, enthält, insbesondere wobei das Copolyaramid die wiederkehrenden Struktureinheiten

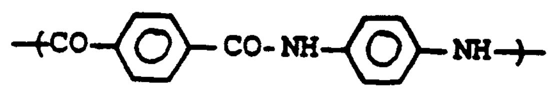

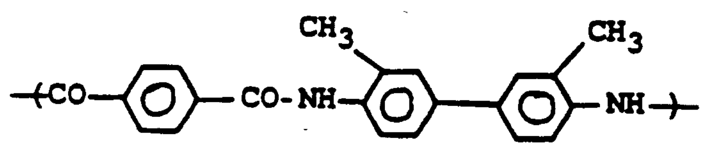

und

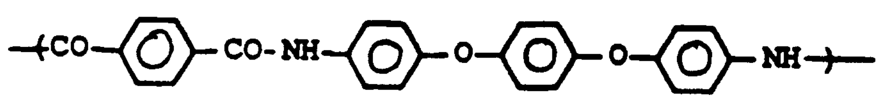

aufweist.

Copolyaramide dieser Zusammensetzung sind aus der EP-A 0 199 090 bekannt, auf die hiermit Bezug genommen wird.

Die Herstellung von Polyaramiden kann im allgemeinen in bekannter Weise durch Lösungs-, Grenzflächen- oder Schmelzekondensation erfolgen. Hierbei bestimmt die Art der Durchführung der Polykondensation, ob statistische Copolymere, Block- oder Pfropfcopolymere entstehen.

Die Lösungskondensation der aromatischen Dicarbonsäuredichloride mit den aromatischen Diaminen wird in aprotischen, polaren Lösungsmitteln vom Amidtyp wie N,N-Dimethylacetamid oder insbesondere N-Methyl-2-pyrrolidon durchgeführt. Gegebenenfalls können diesen Lösungsmitteln in bekannter Weise zur Erhöhung der Lösefähigkeit bzw. zur Stabilisierung der Polyamidlösungen Halogenidsalze der ersten und/oder zweiten Gruppe des periodischen Systems zugegeben werden. Bevorzugte Zusätze sind Calciumchlorid und/oder Lithiumchlorid. Die Menge an Dicarbonsäuredichlorid wird so gewählt, daß die gewünschte Lösungsviskosität erreicht wird.

Die Polykondensationstemperaturen liegen üblicherweise zwischen -20 und +120 °C, bevorzugt zwischen +10 und +100 °C. Besonders gute Ergebnisse werden bei Reaktionstemperaturen zwischen +10

und +80 °C erzielt. Die Polykondensationsreaktionen werden im allgemeinen so ausgeführt, daß nach Abschluß der Reaktion 2 bis 30, vorzugsweise 3,5 bis 20 Gew.-% an Polykondensat in der Lösung vorliegen.

Die Polykondensation kann in üblicher Weise z.B. durch Zugabe von monofunktionellen Verbindungen wie Benzoylchlorid gestoppt werden.

Nach Beendigung der Polykondensation, d.h. wenn die Polymerlösung die zur Weiterverarbeitung erforderliche Viskosität erreicht hat, wird der entstandene und locker an das Amidlösungsmittel gebundene Chlorwasserstoff durch Zugabe basischer Substanzen neutralisiert. Geeignet sind dafür beispielsweise Lithiumhydroxid, Calciumhydroxid, insbesondere aber Calciumoxid.

Die Legierungen gemäß der Erfindung können im allgemeinen in üblicher Weise hergestellt werden aus gemeinsamer Lösung von PVP und einem Polyaramid in einem aprotischen organischen

Lösungsmittel, z.B. Dimethylformamid, Dimethylsulfoxid, N-Methylpyrrolidon oder N,N-Dimethylacetamid. Dazu stehen beispielsweise folgende Möglichkeiten zur Wahl:

1.

a) Polykondensation eines Polyaramides mittels Lösungs-, Grenzflächen- oder Schmelzekondensation,

b) Lösen des resultierenden Polyaramides,

c) Lösen von PVP und

d) anschließend Mischen der PVP- mit der Polyaramidlösung.

2.

a) Lösungskondensation eines Polyaramides und

b) anschließend direktes Beimengen von trockenem PVP oder einer PVP-Lösung direkt in den Polykondensationsansatz.

3.

a) Lösungskondensation eines Polyaramides in Gegenwart von PVP.

Auch auf diese Weise werden homogene Mischungen der Komponenten erhalten. Dazu werden die Diamine gemeinsam mit PVP gelöst und durch Zugabe von Dicarbonsäuredichloriden zu einer PVP/Polyaramid-Lösung kondensiert.

Die Legierungen können durch Entfernen des Lösungsmittels, vorzugsweise durch Verdampfen, isoliert werden, oder die erhaltenen PVP-Polyaramid-Lösungen werden in bekannter Weise zu geformten Gebilden, wie Filmen oder Preßkörpern, weiterverarbeitet. Die Verwendbarkeit der Legierungen ist sehr vielseitig, da sich die Komponenten homogen mischen.

Das Molekulargewicht des PVP, angegeben als Gewichtsmittel, liegt im allgemeinen bei 1000 - 3 000 000, vorzugsweise bei 40 000 bis 200 000, insbesondere bei 50 000 bis 100 000.

Die Komponenten der Legierungen gemäß der Erfindung sind in allen Verhältnissen homogen mischbar. Insbesondere enthalten die Legierungen PVP in Mengen von 2 bis 98 Gew.-%, bevorzugt von 15 bis 85 Gew.-% und besonders bevorzugt von 30 bis 70 Gew.-%, bezogen auf die Summe der Komponenten (A + B).

Die Legierungen können Additive in üblichen Mengen enthalten, z.B. thermische Stabilisatoren oder UV-Stabilisatoren. Auch verstärkende Fasern können im allgemeinen in Mengen bis zu 50 Gew.-% zugefügt werden, z.B. Kohlefasern, Aramidfasern oder Glasfasern, auch in Form von Geweben. Darüber hinaus können weitere Polymere, z.B. Polyimide oder Polyester, zugesetzt werden, z.B. in Mengen bis zu 10 Gew.-%. Die Mengenverhältnisse beziehen sich in beiden Fällen stets auf die Summe der Komponenten (A + B).

In Abhängigkeit des PVP-Gehaltes läßt sich die Glastemperatur der erfindungsgemäßen Legierungen gezielt variieren. In gleicher Weise kann die Wasseraufnahmefähigkeit der Legierungen beeinflußt werden. Die Färbbarkeit von Aramiden kann erreicht werden z.B. durch Beimischen eines farbigen PVP-Copolymeren. Schließlich ist der Einsatz der erfindungsgemäßen Legierungen wirtschaftlicher im Vergleich zu den Aramiden.

Die homogene Mischbarkeit der Komponenten der Legierungen wurde unter Anwendung mehrerer der vorstehend beschriebenen Methoden nachgewiesen. Beispielsweise zeigen diejenigen homogenen Legierungen, die ein Polyaramid mit einer unterhalb der Zersetzungstemperatur differentialkalorimetrisch nachweisbaren Glastemperatur enthalten, eine einzige, differentialkalorimetrisch nachweisbare Glastemperatur, die zwischen der von PVP (175 °C) und der des eingesetzten Polyaramides liegt. Völlig überraschend ist außerdem, daß das wasserlösliche PVP aus den erfindungsgemäßen Legierungen durch Wasser nicht herausgelöst wird, auch nicht durch mehrstündiges Kochen. Dies ist ein weiteres Indiz für das Vorliegen einer Legierung, die aus homogen gemischten Komponenten besteht.

**Beispiele**

1) 0,4 mol 2,2'-Bis[4-(4'-Aminophenoxy)phenyl]-propan wurden unter Stickstoff in 2000 g N-Methylpyrrolidon (NMP) gelöst und zwischen 15 °C und 70 °C innerhalb von 60 Minuten 0,4 mol 5-tert.-Butylisophthalsäuredichlorid zugegeben.

Die klare Lösung wurde noch ca. 40 Minuten lang bei 70 °C nachgerührt und anschließend mit 24,5 g CaO (96 %ig, d.h. im Überschuß, entsprechend 0,42 mol) neutralisiert und weitere 30 Minuten bei 70 °C nachgerührt.

Die Lösung wurde filtriert und in Wasser koaguliert. Das ausgefällte Polyaramid wurde mehrfach mit Wasser und dann mit Aceton gewaschen. Die Trocknung des Polymeren erfolgte bei 130 °C unter vermindertem Druck bis zur Gewichtskonstanz.

Das erhaltene Polyaramid besitzt nach DSC-Messungen eine Glastemperatur Tg von 255 °C.

2) 5 g Poly-N-vinylpyrrolidon (PVP) wurden mit 5 g des in Beispiel 1 beschriebenen Polyaramides zusammen in ca. 90 g N-Methylpyrrolidon bei Raumtemperatur gelöst. Die Mischung wurde anschließend bei 110 °C unter vermindertem Druck bis zur Gewichtskonstanz vom Lösemittel befreit. Die resultierende PVP-Polyaramid-Legierung zeigt nach DSC-Messungen eine einzige Glastemperatur von 225 °C und wurde daher als homogen gemischt beurteilt.

3) Gemäß Beispiel 1 wurde ein Polyaramid hergestellt unter Verwendung von 0,4 mol des Diamins aus Beispiel 1 und 0,4 mol Terephthalsäuredichlorid (TPC). Tg 235 °C.

Mit dem erhaltenen Polyaramid wurden PVP-Legierungen unterschiedlichen PVP-Gehaltes gemäß Beispiel 2 hergestellt.

Alle erhaltenen Mischungen zeigen nach DSC-Messungen jeweils eine einzige, von der Zusammensetzung abhängige Glastemperatur und wurden daher als homogen gemischt beurteilt (s. Figur und nachfolgende Tabelle).

| | | | | | |
|---|---|---|---|---|---|
| PVP-Gehalt in Gew.-% | 0 | 25 | 50 | 75 | 100 |
| Glastemperatur in °C | 235 | 228 | 217 | 200 | 175 |

4) 4 g einer in Beispiel 3 beschriebenen Legierung, bestehend aus 50 % PVP und 50 % Polyaramid, wurden in einer Mühle gemahlen und anschließend bei 250 °C unter einem Druck von 0,2 t verpreßt. Es resultierte eine transparente, das sichtbare Licht nicht streuende Platte.

5) 15 g PVP und 15 g des in Beispiel 3 beschriebenen Polyaramides wurden in 170 g N-Methylpyrrolidon bei Raumtemperatur gemeinsam gelöst, die Lösung entgast und zu Folien gegossen. Dazu wurde die Mischlösung mit einer Rakel bei 60 °C auf Glasplatten ausgezogen. Die gegossenen Folien wurden anschließend 48 Stunden bei 90 °C vorgetrocknet und danach unter vermindertem Druck bei 110 °C bis zur Gewichtskonstanz von Lösungsmittel befreit. Die Foliendicken betrugen je nach den aufgerakelten Schichtdicken zwischen 2 und 100 µm.

Die Folien sind mechanisch stabil, nicht spröde, farblos und transparent. Sie zeigen eine Wasseraufnahme von 9,8 % gemessen bei 23 °C und 85 % relativer Feuchte. Mit kochendem Wasser für ca. 120 Minuten behandelte Folien zeigen eine einzige Glastemperatur von 217 °C, die mit der Glastemperatur der unbehandelten Folien übereinstimmt.

6) In 3,750 g N-Methylpyrrolidon wurden 0,2 mol p-Phenylendiamin, 0,2 mol 1,4-Bis-(4'-aminophenoxy)-benzol und 0,4 mol 3,3'-Dimethylbenzidin gemeinsam gelöst. Bei 16 °C wurde auf einmal 0,8 mol Terephthalsäuredichlorid zugegeben und innerhalb von ca. 60 Minuten unter Rühren auf 60 °C erhitzt. Die klare Lösung wurde mit 49 g CaO (96 %ig) neutralisiert, anschließend bei 70 °C ca. 60 Minuten nachgerührt und unter Rühren 268,8 g getrocknetes PVP beigefügt. Die Mischlösung wurde filtriert und gemäß Beispiel 5 zu Folien verarbeitet.

Die erhaltenen Folien sind transparent, farblos und mechanisch stabil. Sie zeigen nach DSC-Messungen ebenso wie das eingesetzte Aramid keine Glastemperatur unterhalb von 400 °C.

Es wurden sowohl Bruchflächen von in flüssigem Stickstoff gebrochenen Folien als auch mit verschiedenen Lösemitteln (z.B. Wasser oder Methylenchlorid) oder Sauerstoff geätzte Oberflächen rasterelektronenmikroskopisch untersucht. Alle Aufnahmen zeigen glatte Bruch- bzw. Oberflächen.

Neben den rasterelektronenmikroskopischen Untersuchungen wurden auch transmissionselektronenmikroskopische Untersuchungen sowohl von Dünnschichten als auch von mit Jod kontrastierten Dünnschichten der Folien durchgeführt. Alle transmissionselektronenmikroskopischen Aufnahmen zeigten keine Inhomogenität der Filme.

Die beschriebenen experimentellen Ergebnisse zeigen, daß die Komponenten der Legierungen homogen gemischt vorliegen.

7) (Polykondensation in Gegenwart von PVP) 89,7 g getrocknetes PVP wurden in 734 g destilliertem NMP gelöst. Eine Lösung von 10,8 g p-Phenylendiamin, 42,5 g 3,3'-Dimethylbenzidin und 29,2 g 1,4-Bis-(4'-aminophenoxy)benzol in 1000 g destilliertem NMP wurde hinzugefügt und die Mischung auf 15 °C abgekühlt.

Zu dieser Lösung wurden unter Rühren 78,8 g Terephthalsäuredichlorid (TPC) auf einmal zugegeben. Durch die Reaktionswärme stieg die Temperatur auf ca. 23 °C an. Die viskose Lösung wurde auf 50 °C erwärmt und soviel weiteres TPC zugegeben, bis die gewünschte Viskosität erreicht wurde. Danach wurden zur Umsetzung der noch verbliebenen Aminoendgruppen 2,4 g Benzoylchlorid zugegeben. Es wurde ca. 1/2 Stunde nachgerührt und dann der lose an NMP gebundene Chlorwasserstoff durch Zugabe von 24,5 g Calciumoxid neutralisiert. Nach Filtration ist die viskose Lösung direkt zum Herstellen von Folien, Überzügen und dergleichen geeignet.

8) - 14) In der nachfolgenden Tabelle sind bei den einzelnen Beispielen die Ausgangsstoffe für die Polyaramide aufgeführt sowie deren Glastemperaturen (Tg'), ferner die eingesetzten Mengen sowie die erhaltenen Glastemperaturen der Mischungen ($Tg^2$).. Die Herstellung der Polyaramide erfolgte gemäß Beispiel 1, die Herstellung der Legierungen entsprechend Beispiel 2 (in allen Fällen ist das Gewichts-Verhältnis PVP zu Polyaramid wie 50:50) und die Herstellung der Folie gemäß Beispiel 14 (Verhältnis 50:50).

**TABELLE**

| Bsp. | Diamin | Mol | Dicarbonsäure-chlorid | Mol | Tg[1] | Formkörper** | Tg[2] |
|---|---|---|---|---|---|---|---|
| 8 | 2,2'-Bis[4-(4'-Aminophenoxy)-phenyl]-propan | 0,4 | 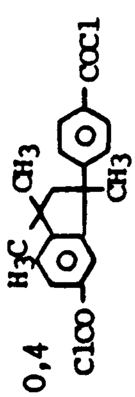 | 0,4 | 265°C | F | 230°C |
| 9 | Bis[4-(4'-Aminophenoxy)phenyl]-sulfon | 0,4 | TDC* | 0,4 | 280°C | L | 210°C |
| 10 | 1,2-Bis[4'-Aminophenoxy]benzol | 0,4 | TDC | 0,4 | 110°C | L | 150°C |
| 11 | 2,2'-Bis[4-(4'-Aminophenoxy)-phenyl]-propan | 0,2 | | | | | |
| | 1,4-Bis[4'-Aminophenylisopropyl]-benzol | 0,2 | TDC | 0,4 | 265°C | L | 220°C |
| 12 | 2,2'-Bis[4-(4'-Aminophenoxy)-phenyl]-propan | 0,4 | TDC | 0,2 | 245°C | L | 220°C |
| | | | 5-tert-Butyl-isophthalsäuredichlorid | 0,2 | | | |
| 13 | 2,2'-Bis[4-(4'-Aminophenoxy)-phenyl]-propan | 0,2 | | | | | |
| | Bis[4-Aminophenyl]sulfon | 0,2 | TDC | 0,4 | 295°C | L | 230°C |
| 14 | 2,2'-Bis[4-(4'-Aminophenoxy)-phenyl]-propan | 0,2 | | | | | |
| | 1,4-Bis[4'-Aminophenoxy]benzol | 0,2 | TDC | 0,4 | 260°C | L | 215°C |

* TDC = Terephthalsäuredichlorid
** F = Folie
L = Legierung

**Vergleichsbeispiel**

5 g PVP wurden mit 5 g eines Polyetherimids [R]Ultem 1000, (Hersteller General Electric Co., Schenectady N.Y., USA) (Tg = 217 °C) in 90 g NMP bei Raumtemperatur gelöst und anschließend durch Abdampfen unter vermindertem Druck das Lösungsmittel entfernt. Die Legierung zeigt die beiden Glastemperaturen der Ausgangsstoffe von 175 °C und 217 °C und ist demnach nicht homogen gemischt.

## Patentansprüche

1. Homogen gemischte Legierung, enthaltend im wesentlichen
   A) Poly-N-vinylpyrrolidon und
   B) mindestens ein Homo- oder Copolyaramid mit mindestens einer wiederkehrenden Struktureinheit der Formel (I)

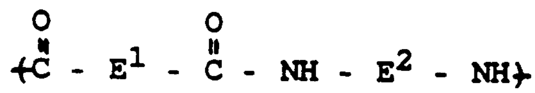

(I)

in der $E^1$ und $E^2$ gleich oder verschieden sind und aus den Gruppierungen

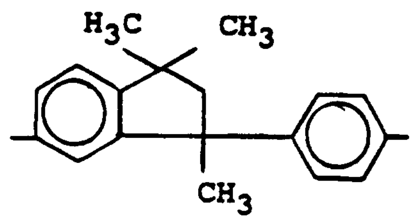

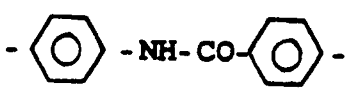

- $Ar^1$- oder
- $Ar^1$-X-$Ar^2$- ausgewählt sind,

in denen $Ar^1$ und $Ar^2$ gleiche oder verschiedene 1,2-Phenylen-, 1,3-Phenylen- oder 1,4-Phenylenreste, die durch ($C_1$-$C_6$)-Alkyl, ($C_1$-$C_6$)-Alkoxy, $-CF_3$ oder Halogen substituiert sein können, bedeuten und der Rest X

a) eine direkte Bindung ist oder einen der folgenden zweiwertigen Reste darstellt -O-, $-SO_2-$, -CO-, $-C(R^1)_2-$, in dem $R^1$ Wasserstoff, ($C_1$-$C_6$)-Alkyl oder Fluoralkyl mit 1-4 C-Atomen in der Alkylgruppe ist, oder

b) -Z-$Ar^1$-Z-, in dem Z der Rest -O- oder $-C(CH_3)_2-$ ist, oder

c) -O-$Ar^1$-Y-$Ar^2$-O-, in der Y die unter Xa) angegebene Bedeutung hat.

2. Legierung nach Anspruch 1, dadurch gekennzeichnet, daß der Halogenrest Fluor, Chlor oder Brom ist.

3. Legierung nach Anspruch 1 oder 2, dadurch gekennzeichnet, daß die Gruppierung $E^1$ in den Struktureinheiten gleich oder verschieden ist und einen 1,3- oder 1,4-Phenylenrest, oder den Rest

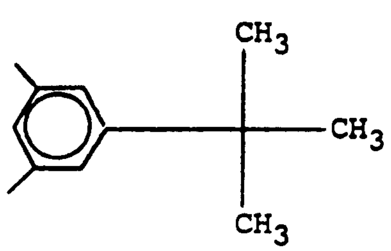

oder

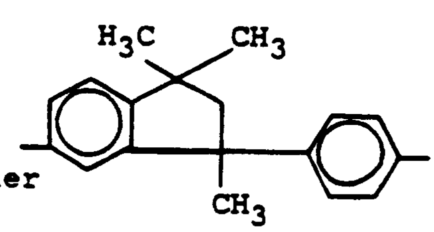

darstellt.

4. Legierung nach Anspruch 1 oder 2, dadurch gekennzeichnet, daß die Gruppierung $E^2$ in den Struktureinheiten gleich oder verschieden ist und den 1,4-Phenylenrest oder den Rest

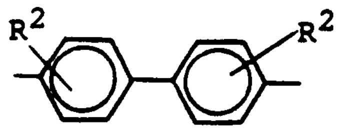

in dem $R^2$ einen niederen Alkyl- oder Alkoxyrest mit bis zu je 4 C-Atomen in der Alkylgruppe oder F, Cl oder Br darstellt, oder den Rest

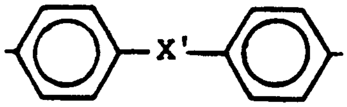

bedeutet, wobei X' die Gruppe $-C(R^1)_2-$, in der $R^1$ Wasserstoff oder $(C_1-C_4)$-Alkyl ist, oder die Gruppierung

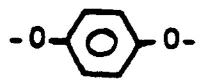

darstellt.

5. Legierung nach einem oder mehreren der Ansprüche 1 bis 4, dadurch gekennzeichnet, daß das aromatische Polyaramid sowohl als statistisches Copolymer als auch als Block- oder Pfropfcopolymer vorliegt.

6. Legierung nach einem oder mehreren der Ansprüche 1 bis 5, enthaltend
   a) Poly-N-vinylpyrrolidon und
   b) wenigstens ein Copolyaramid mit mindestens drei statistisch wiederkehrenden Struktureinheiten der Formel (I), in der
      $E^1$ ein zweiwertiger p-Phenylenrest ist,
      $E^2$ in den drei wiederkehrenden Struktureinheiten je einmal ein zweiwertiger p-Phenylenrest, ein Rest der Formel

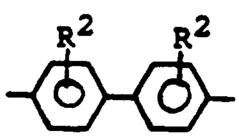

mit $R^2$ gleich $CH_3$ , $OCH_3$, F, Cl oder Br, und ein Rest der Formel

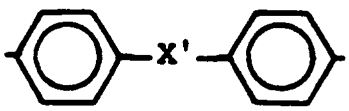

ist, bei dem X' die oben angeführte Bedeutung hat.

7. Legierung nach Anspruch 6, dadurch gekennzeichnet, daß das Copolyaramid die wiederkehrenden Struktureinheiten

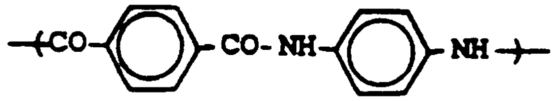

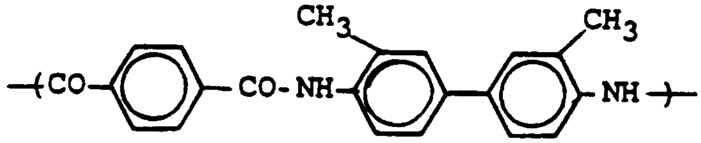

und

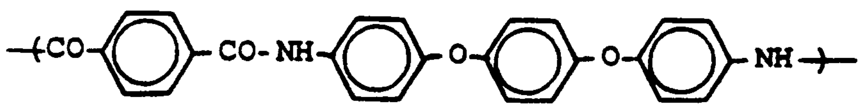

aufweist.

8. Legierung nach einem oder mehreren der Ansprüche 1 bis 7, dadurch gekennzeichnet, daß das Molekulargewicht von Poly-N-vinylpyrrolidon angegeben als Gewichtsmittel, im Bereich von 1000 bis 3 Millionen, vorzugsweise 40 000 bis 200 000 liegt.

9. Legierung nach einem oder mehreren der Ansprüche 1 bis 8, dadurch gekennzeichnet, daß das Poly-N-vinylpyrrolidon (Komponente A)) in Mengen von 2 bis 98 Gew.-% vorzugsweise von 15 bis 85 Gew.-%, bezogen auf die Summe der Komponenten A) + B), enthalten ist.

10. Legierung nach einem oder mehreren der Ansprüche 1 bis 9, dadurch gekennzeichnet, daß sie Additive in üblichen Mengen enthält.

11. Legierung nach einem oder mehreren der Ansprüche 1 bis 10, dadurch gekennzeichnet, daß zusätzlich Polymere in Mengen bis zu 10 Gew.-%, bezogen auf A) und B), enthalten sind.

12. Verfahren zur Herstellung einer homogen mischbaren Legierung aus Poly-N-vinylpyrrolidon und einem Polyaramid dadurch gekennzeichnet, daS
A) Poly-N-vinylpyrrolidon, gelöst oder in Substanz, einer Lösung von B) mindestens einem Homo- oder Copolyaramid mit mindestens einer wiederkehrenden Struktureinheit der Formel (I)

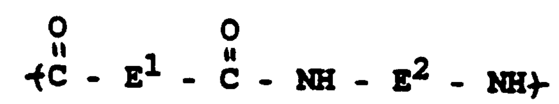

(I')

zugesetzt wird, das durch Lösungs-, Grenzflächen- oder Schmelzekondensation erhalten worden ist, worauf das Lösungsmittel aus der Lösung entfernt wird, und wobei in den Struktureinheiten der Formel (I) $E^1$ und $E^2$ gleich oder verschieden sind und aus den Gruppierungen

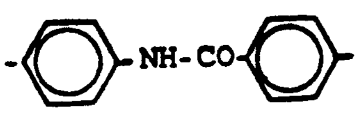

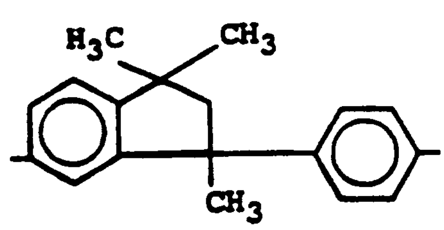

- $Ar^1$- oder
- $Ar^1$-X-$Ar^2$- ausgewählt sind,

in denen $Ar^1$ und $Ar^2$ gleiche oder verschiedene 1,2-Phenylen-, 1,3-Phenylen- oder 1,4-Phenylenreste, die durch ($C_1$-$C_6$)-Alkyl, ($C_1$-$C_6$)-Alkoxy, -$CF_3$ oder Halogen substituiert sein können, bedeuten und der Rest X

a) eine direkte Bindung ist oder einen der folgenden zweiwertigen Reste darstellt
-O-, $-SO_2-$, -CO-, $-C(R^1)_2-$, in dem $R^1$ Wasserstoff, $(C_1-C_6)$-Alkyl oder Fluoralkyl mit 1-4 C-Atomen in der Alkylgruppe ist, oder
b) $-Z-Ar^1-Z-$, in dem Z der Rest -O- oder $-C(CH_3)-_2$ ist, oder
c) $-O-Ar^1-Y-Ar^2-O-$, in der Y die unter Xa) angegebene Bedeutung hat.

**13.** Verfahren nach Anspruch 12, dadurch gekennzeichnet, daß bei der Lösungskondensation das Poly-N-vinylpyrrolidon gemeinsam mit der Diaminkomponente gelöst wird und dieses Gemisch zusammen mit Dicarbonsäurechloriden der Kondensation unterworfen wird.

**14.** Verfahren nach Anspruch 12 oder 13, dadurch gekennzeichnet, daS das Lösungsmittel durch Verdampfen entfernt wird.

**15.** Verwendung der Legierung nach einem oder mehreren der Ansprüche 1 bis 11 zur Herstellung von Formkörpern.

**16.** Verwendung nach Anspruch 15 zur Herstellung von Folien, Gießkörpern, Beschichtungen oder Preßkörpern.

## Claims

**1.** A homogeneously mixed alloy, essentially containing
A) poly-N-vinylpyrrolidone and
B) at least one homo- or copolyaramid containing at least one recurring structural unit of the formula (I)

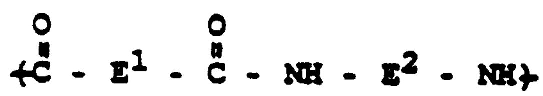 (I)

in which $E^1$ and $E^2$ are identical or different and are selected from the groups

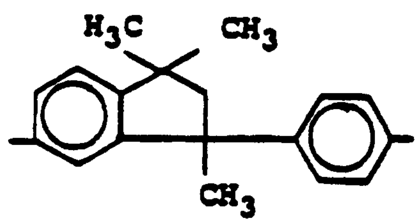

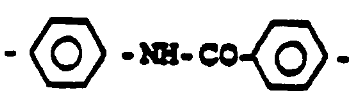

- $Ar^1$- or
- $Ar^1-X-Ar^2-$,

in which $Ar^1$ and $Ar^2$ are identical or different 1,2-phenylene, 1,3-phenylene or 1,4-phenylene radicals which may be substituted by $(C_1-C_6)$-alkyl, $(C_1-C_6)$-alkoxy, $-CF_3$ or halogen, and the radical X is
a) a direct bond or one of the following divalent radicals
-O-, $-SO_2-$, -CO-, $-C(R^1)_2-$, in which $R^1$ is hydrogen, $(C_1-C_6)$-alkyl or fluoroalkyl having 1-4 carbon atoms in the alkyl group, or
b) $-Z-Ar^1-Z-$, in which Z is the radical -O- or $-C(CH_3)-_2$, or
c) $-O-Ar^1-Y-Ar^2-O-$, in which Y is as defined under Xa).

**2.** An alloy as claimed in claim 1, wherein the halogen radical is fluorine, chlorine or bromine.

3. An alloy as claimed in claim 1 or 2, wherein the group $E^1$ in the structural units is identical or different and is a 1,3- or 1,4-phenylene radical or the radical

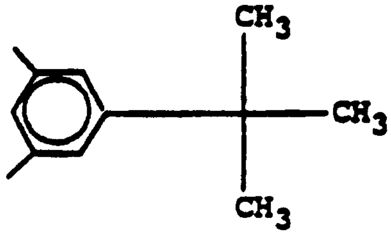

or

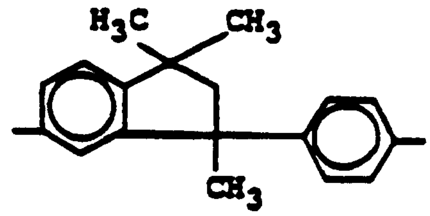

4. An alloy as claimed in claim 1 or 2, wherein the group $E^2$ in the structural units is identical or different and is the 1,4-phenylene radical or the radical

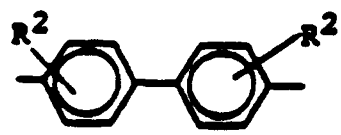

in which $R^2$ is a lower alkyl or alkoxy radical, in each case having up to 4 carbon atoms in the alkyl group, or is F, Cl or Br,
or the radical

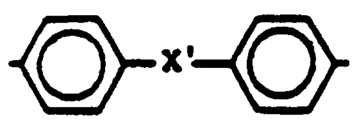

where X' is the group $-C(R^1)_2-$, in which $R^1$ is hydrogen or $(C_1-C_4)$-alkyl, or the group

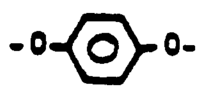

5. An alloy as claimed in one or more of claims 1 to 4, wherein the aromatic polyaramid is in the form of either a random copolymer or a block or graft copolymer.

6. An alloy as claimed in one or more of claims 1 to 5, containing
   a) poly-N-vinylpyrrolidone and
   b) at least one copolyaramid containing at least three randomly recurring structural units of the formula (I), in which
      $E^1$ is a divalent p-phenylene radical,
      $E^2$ in the three recurring structural units is once each a divalent p-phenylene radical,
   a radical of the formula

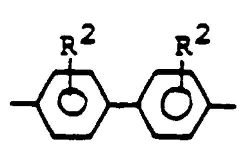

where $R^2$ is $-CH_3-$, $OCH_3$, F, Cl or Br, and a radical of the formula

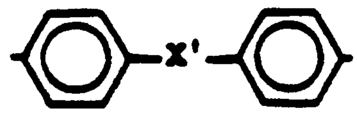

in which X' is as defined above.

7. An alloy as claimed in claim 6, wherein the copolyaramid contains the recurring structural units

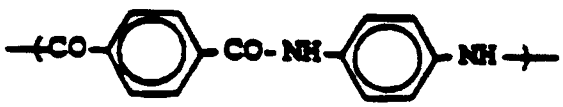

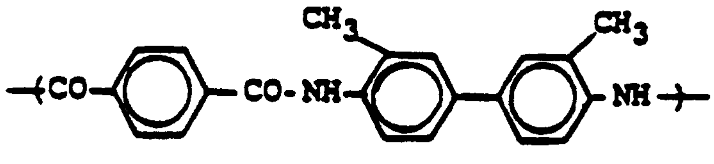

and

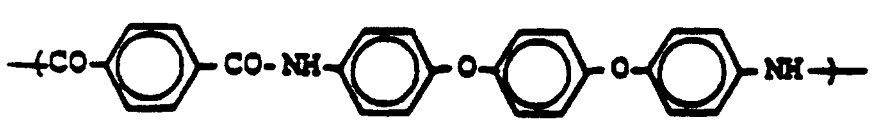

8. An alloy as claimed in one or more of claims 1 to 7, wherein the molecular weight of PVP, given as the weight average, is in the range from 1,000 to 3 million, preferably 40,000 to 200,000.

9. An alloy as claimed in one or more of claims 1 to 8, wherein the PVP (component a)) is present in amounts of from 2 to 98% by weight, preferably from 15 to 85% by weight, relative to the sum of components A) + B).

10. An alloy as claimed in one or more of claims 1 to 9, containing additives in customary amounts.

11. An alloy as claimed in one or more of claims 1 to 10, wherein, in addition, polymers are present in amounts of up to 10% by weight, relative to A) and B).

12. A process for the preparation of a homogeneously miscible alloy comprising PVP and a polyaramid, which comprises

a) adding poly-N-vinylpyrrolidone, dissolved or in the solid state, to a solution of B) at least one homo- or copolyaramid containing at least one recurring structural unit of the formula (I)

$$-\!\left(\overset{O}{\overset{\|}{C}} - E^1 - \overset{O}{\overset{\|}{C}} - NH - E^2 - NH\right)\!- \qquad (I)$$

obtained by solution, interfaces (sic) or melt condensation, then removing the solvent from the solution, and where, in the structural units of the formula (I), $E^1$ and $E^2$ are identical or different and are selected from the groups

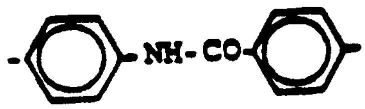
,
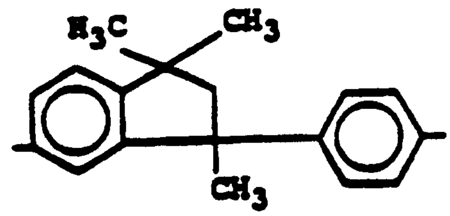

- $Ar^1$-
- $Ar^1$-X-$Ar^2$-,

in which $Ar^1$ and $Ar^2$ are identical or different 1,2-phenylene, 1,3-phenylene or 1,4-phenylene radicals, which may be substituted by ($C_1$-$C_6$)-alkyl, ($C_1$-$C_6$)-alkoxy, -$CF_3$ or halogen, and the radical X is

a) is a direct bond or one of the following divalent radicals -O-, -$SO_2$-, -CO-, -$C(R^1)_2$-, in which $R^1$ is hydrogen, ($C_1$-$C_6$)-alkyl or fluoroalkyl having 1-4 carbon atoms in the alkyl group, or

b) -Z-$Ar^1$-Z-, in which Z is the radical -O- or -$C(CH_3)$-$_2$, or

c) -O-$Ar^1$-Y-$Ar^2$-O-, in which Y is as defined under Xa).

**13.** The process as claimed in claim 12, wherein, in the case of the solution condensation, the PVP is dissolved together with the diamine component, and this mixture is subjected to the condensation together with dicarboxylic acid chlorides.

**14.** The process as claimed in claim 12 or 13, wherein the solvent is removed by evaporation.

**15.** The use of an alloy as claimed in one or more of claims 1 to 11 for the production of moldings.

**16.** The use as claimed in claim 15 for the production of films, castings, coatings or pressings.

## Revendications

**1.** Alliage mélangé de manière homogène, contenant essentiellement

A) de la poly-N-vinylpyrrolidone et

B) au moins un homo- ou copolyaramide ayant au moins un motif structural de formule (I)

$$\left[\overset{\overset{O}{\|}}{C} - E^1 - \overset{\overset{O}{\|}}{C} - NH - E^2 - NH\right] \qquad (I)$$

dans laquelle $E^1$ et $E^2$ sont identiques ou différents et sont choisis parmi les groupements

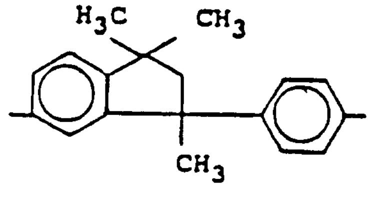

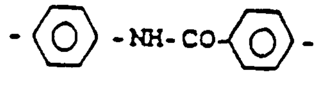

- $Ar^1$- ou
- $Ar^1$-X-$Ar^2$-

dans lesquels $Ar^1$ et $Ar^2$ désignent des radicaux 1,2-phénylène, 1,3-phénylène ou 1,4-phénylène identiques ou différents, qui peuvent être substitués par des groupes alkyle en $C_1$-$C_6$, alcoxy en $C_1$-$C_6$, -$CF_3$ ou par des atomes d'halogènes, et le radical X

a) représente une liaison directe ou un des radicaux divalents suivants :

-O-, $-SO_2-$, -CO-, $C(R^1)_2-$, dans lequel $R^1$ est un atomes d'hydrogène, un groupe alkyle en $C_1$-$C_6$ ou fluoralkyle ayant 1 à 4 atomes de de C dans le groupe alkyle, ou

b) un groupe $-Z-Ar^1-Z-$, dans lequel Z est le radical -O- ou $-C(CH_3)-2$, ou

c) un groupe $-O-Ar^1-Y-Ar^2-O-$, dans lequel Y a la signification indiquée en Xa).

**2.** Alliage selon la revendication 1, caractérisé en ce que le radical haogène est un atome de fluor, de chlore ou de brome.

**3.** Alliage selon la revendication 1 ou 2, caractérisé en ce que le groupement $E^1$ est identique ou différent dans les motifs structuraux et représente un radical 1,3- ou 1,4-phénylène, ou le radical

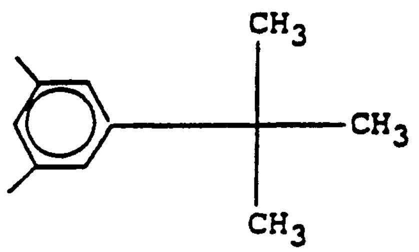

ou

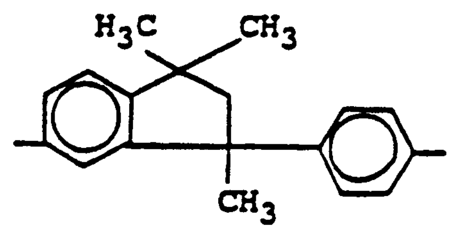

**4.** Alliage selon la revendication 1 ou 2, caractérisé en ce que le groupement $E^2$ est identique ou différent dans les motifs structuraux et représente le radical 1,4-phénylène ou le radical

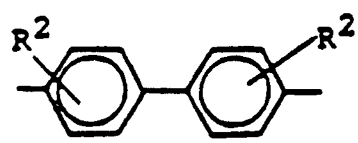

dans lequel $R^2$ représente un radical alkyle ou alcoxy inférieur ayant jusqu'à 4 atomes de C dans le groupe alkyle, ou F, Cl ou Br ou le radical

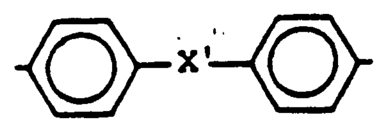

dans lequel X' est le groupe $-C(R^1)_2$ dans lequel $R^1$ est un atome d'hydrogène ou un groupe alkyle en $C_1$-$C_4$, ou le groupement

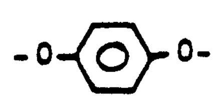

**5.** Alliage selon l'une ou plusieurs des revendications 1 à 4, caractérisé en ce que le polyaramide aromatique est présent tant à l'état de copolymère statistique que de copolymère séquencé ou greffé.

**6.** Alliage selon l'une ou plusieurs des revendications 1 à 5, contenant

a) de la poly-N-vinylpyrrolidone et

b) au moins un copolyaramide ayant au moins trois motifs structuraux de formule (I) se répétant statistiquement, et dans lequel

$E^1$ est un radical p-phénylène divalent,

$E^2n$ dans les trois motifs structuraux se répétant, est, chaque fois, un radical p-phénylène divalent,

un radical de formule

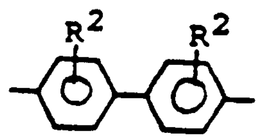

dans laquelle $R^2$ est $CH_3$, $OCH_3$, F, Cl ou Br, et un radical de formule

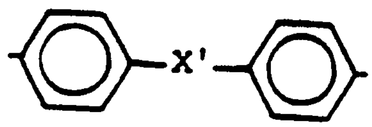

dans laquelle X' a la signification indiquée ci-dessus.

**7.** Alliage selon la revendication 6, caractérisé en ce que le copolyaramide présente les motifs structuraux

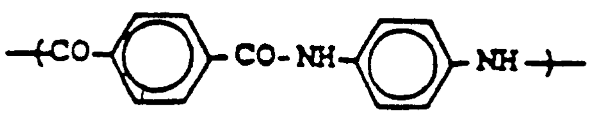

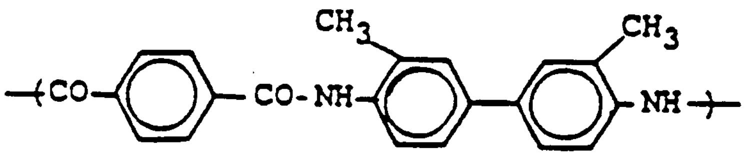

et

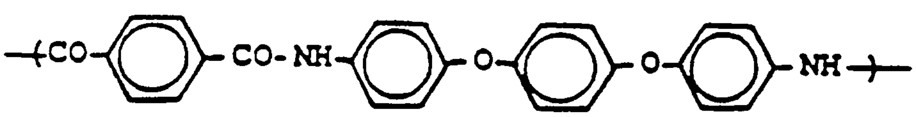

**8.** Alliage selon l'une ou plusieurs des revendications 1 à 7, caractérisé en ce que la mase moléculaire de la poly-N-vinylpyrrolidone, exprimée en moyenne pondérale, est dans le domaine de 1000 à 3 millions, de préférence de 40 000 à 200 000.

**9.** Alliage selon l'une ou plusieurs des revendications 1 à 8, caractérisé en ce que la poly-N-vinylpyrrolidone (composant A) est présente dans des proportions de 2 à 98 % en poids, de préférence de 15 à 85 % en poids par rapport à la somme des composants A + B.

**10.** Alliage selon l'une ou plusieurs des revendications 1 à 9, caractérisé en ce qu'il contient des additifs dans les quantités habituelles.

**11.** Alliage selon l'une ou plusieurs des revendications 1 à 10, caractérisé en ce qu'il contient en outre des polymères dans des quantités allant jusqu'à 10 % en poids par rapport à A) et B).

**12.** Procédé de préparation d'un alliage miscible homogène de poly-N-vinylpyrrolidone et d'un polyaramide, caractérisé en ce que

A) on ajoute de la poly-N-vinylpyrrolidone dissoute ou telle quelle à une solution de B) au moins un homo- ou copolyaramide ayant au moins un motif structural répondant à la formule (I)

$$-\!\!\left( \overset{\overset{O}{\|}}{C} - E^1 - \overset{\overset{O}{\|}}{C} - NH - E^2 - NH \right)\!\!- \qquad (I)$$

qui a été obtenu par condensation en solution, interfacial ou à l'état fondu, après quoi on élimine le solvant de la solution, et dans lequel dans les motifs répondant à la formule (I), $E^1$ et $E^2$ sont identiques ou différents et sont choisis parmi les groupements

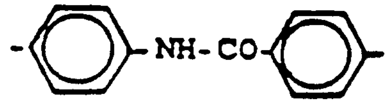

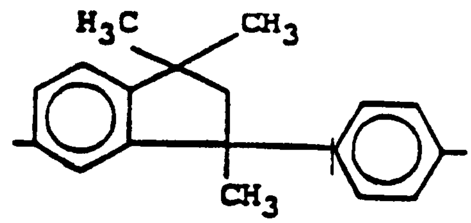

- $Ar^1$- ou
- $Ar^1$-X-$Ar^2$-

dans lequels $Ar^1$ et $Ar^2$ désignent des radicaux 1,2-phénylène, 1,3-phénylène ou 1,4-phénylène identiques ou différents, qui peuvent être substitués par des groupes alkyle en $C_1$-$C_6$, alcoxy en $C_1$-$c_6$, -$CF_3$ ou par des atomes d'halogènes, et le radical X

a) représente une liaison directe ou un des radicaux divalents suivants :
-O-, -$SO_2$-, -CO-, $C(R^1)_2$-, dans lequel $R^1$ est un atome d'hydrogène, un groupe alkyle en $C_1$-$C_6$ ou fluoralkyle ayant 1 à 4 atomes de C dans le groupe alkyle, ou

b) un groupe -Z-$Ar^1$-Z-, dans lequel Z est le radical -O- ou -$C(CH_3)$-2, ou

c) un groupe -O-$Ar^1$-Y-$Ar^2$-O-, dans lequel Y a la signification indiquée en Xa).

**13.** Procédé selon la revendication 12, caractérisé en ce que lors de la condensation en solution, la poly-N-vinylpyrrolidone est dissoute en même temps que le composant diamine et ce mélange est soumis à la condensation en même temps que des chlorures d'acide dicarboxylique.

**14.** Procédé selon la revendication 12 ou 13, caractérisé en ce que le solvant est éliminé par évaporation.

**15.** Utilisation de l'alliage selon l'une ou plusieurs des revendications 1 à 11 pour la fabrication de pièces moulées.

**16.** Utilisation selon la revendication 15 pour la fabrication de feuilles, de pièces coulées, d'enduction ou de pièces moulées par compression.

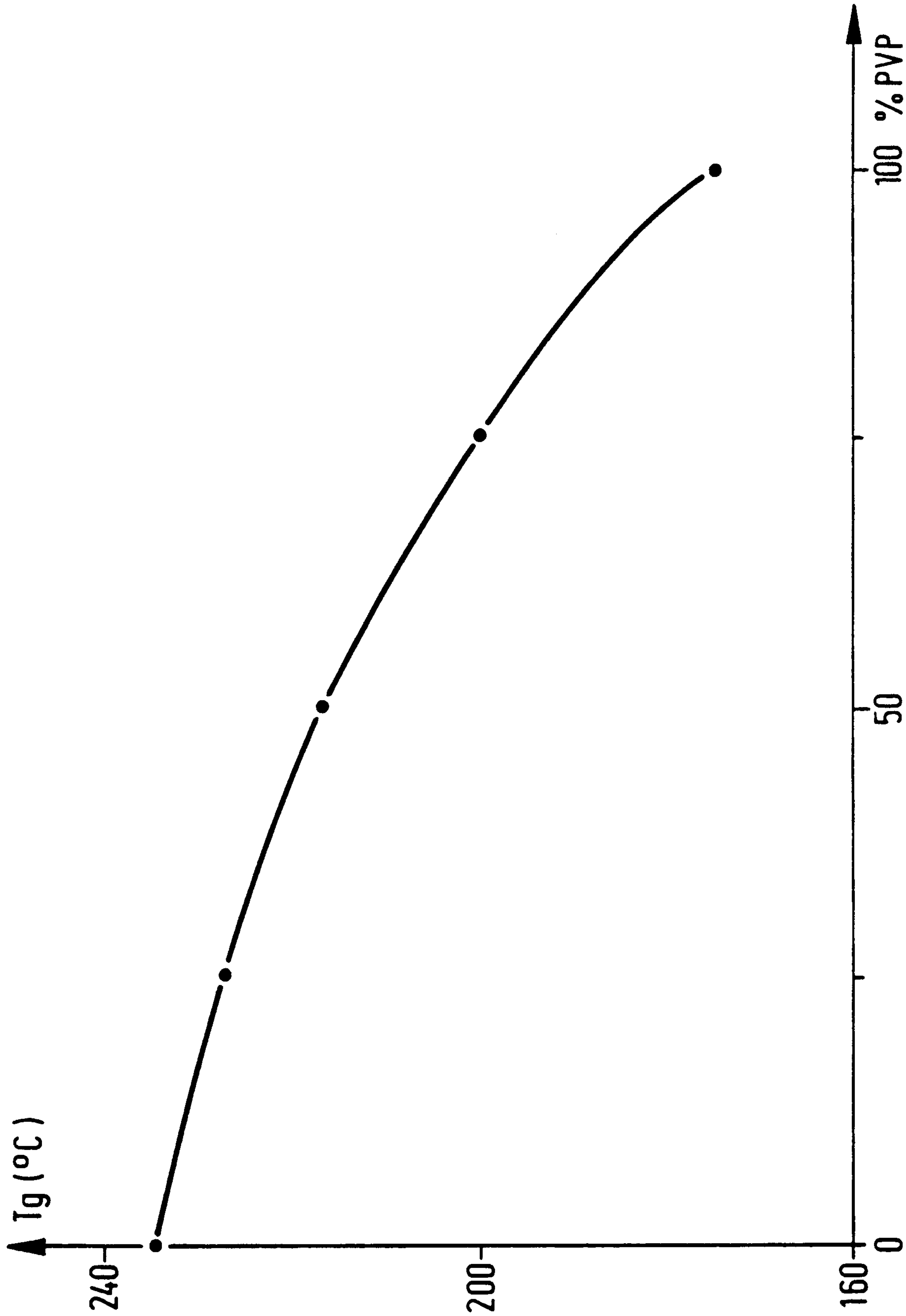
Tg (°C)
% PVP
240
200
160
0
50
100